# EUROPÄISCHE PATENTSCHRIFT

(11) **EP 1 865 394 B1**
(45) Veröffentlichungstag und Bekanntmachung des Hinweises auf die Patenterteilung: **01.04.2009**
(21) Anmeldenummer: 07109659.8
(22) Anmeldetag: 05.06.2007
(51) Int. Cl.: G05B 19/042

(54) **Verfahren zum Austausch eines Feldgerätes der Automatisierungstechnik**
Method for replacing a field device in automation technology
Procédé destiné à l'échange d'un appareil de terrain de la technique d'automatisation

(30) Priorität: 07.06.2006 DE 102006027012
(43) Veröffentlichungstag der Anmeldung: 12.12.2007
(73) Patentinhaber: Endress + Hauser Process Solutions AG, 4153 Reinach BL (CH)
(72) Erfinder: Ichtertz, Francois, 68440, Habsheim (FR)
(74) Vertreter: Andres, Angelika Maria

(56) Entgegenhaltungen:
- DE-A1- 19 624 929
- GB-A- 2 403 042

## Beschreibung

Die Erfindung betrifft ein Verfahren zum Austausch eines Feldgerätes der Automatisierungstechnik gemäß dem Oberbegriff des Anspruchs 1.

In der Automatisierungstechnik insbesondere in der Prozessautomatisierung werden vielfach Feldgeräte eingesetzt, die zur Erfassung und/oder Beeinflussung von Prozessvariablen dienen. Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, die z. B. als Ventile den Durchfluss einer Flüssigkeit in einem Rohrleitungsabschnitt oder als Pumpen den Füllstand in einem Behälter beeinflussen.

Eine Vielzahl solcher Feldgeräte wird von der Fa. Endress + Hauser hergestellt und vertrieben.

In der Regel sind Feldgeräte in modernen Automatisierungsanlagen über Feldbussysteme (Profibus, Foundation Fieldbus etc.) mit übergeordneten Einheiten (z. B. Leitsysteme, Steuereinheiten) verbunden. Diese übergeordneten Einheiten dienen zur Prozesssteuerung, Prozessvisualisierung, Prozessüberwachung sowie zur Inbetriebnahme und zum Bedienen der Feldgeräte.

Als Feldgeräte werden allgemein auch solche Einheiten bezeichnet, die direkt an einen Feldbus angeschlossen sind und zur Kommunikation mit den übergeordneten Einheiten dienen (z. B. Remote I/Os, Gateways, Linking Devices).

Zum Teil sind Feldbussysteme in Unternehmensnetzwerke, die auf Ethernet-Basis arbeiten, integriert. Damit kann aus unterschiedlichen Bereichen eines Unternehmens auf Prozess- bzw. Feldgerätedaten zugegriffen werden.

Zur weltweiten Kommunikation können die Firmennetzwerke auch mit öffentlichen Netzwerken, z. B. dem Internet verbunden sein.

Zum Bedienen der Feldgeräte sind entsprechende Bedienprogramme notwendig (z. B. FieldCare, Endress+Hauser; Pactware; AMS, Emerson; Simatic PDM, Siemens). Zur Anlagensteuerung und -überwachung dienen Leitsystem-Anwendungen (z. B. Simatic PCS7, Siemens; Symphony, ABB; Delta V, Emerson).

Für einen Anlagenbetreiber ist eine hohe Anlagenverfügbarkeit von enormer Wichtigkeit. Einen längeren Anlagenstillstand gilt es möglichst zu vermeiden, da damit meist erhebliche Nachteile u. a. finanzielle Verluste verbunden sind.

Der Ausfall eines einzigen Feldgerätes am Feldbussystem kann zu einem gesamten Anlagenstillstand führen. In der Regel muss das betreffende fehlerhafte Feldgerät ausgetauscht werden. Deshalb sollte ein Gerätetausch möglichst schnell durchführbar sein. Einige Feldgerätehersteller bieten Feldgeräte an, die ein entnehmbares Speichermodul aufweisen, in dem Geräteparameter, die für die Gerätefunktionalität von Wichtigkeit sind, gespeichert sind (Messwerteinheit, Alarmgrenzen, TAG-Name der Messstelle etc.). Im Falle eines Gerätetauschs kann dieses Speichermodul leicht in das Ersatzgerät eingesetzt werden. Somit kann das Ersatzgerät schnell wieder in Betrieb genommen werden und der Anlagenbetrieb fortgesetzt werden.

Beim Feldbussystem Foundation Fieldbus übernehmen Feldgeräte auch Kontrollfunktionen im Hinblick auf Regelkreise, was mit dem Begriff "Control in the Field" bezeichnet wird. Diese Kontrollfunktionen werden über so genannte Funktionsblöcke (function blocks) realisiert. Als Beispiel für einen solchen Funktionsblock sei ein PID-Block erwähnt, der über den Feldbus mit weiteren Funktionsblöcken kommunizieren kann.

Bei Feldgeräten, die Funktionsblöcke aufweise, ist ein Gerätetausch erheblich aufwendiger. In der Regel erfordert hier ein Gerätetausch einen Wartungstechniker vor Ort am Feldgerät und einen Anlagen-Operator, der vom Leitstand aus die Anlage überwacht. Allgemein erfordert ein Gerätetausch bei solchen Feldbussystemen erheblich mehr Know-how.

Häufig erfolgt ein Geräteausfall zu ungünstigen Zeiten, nachts oder an Wochenenden, wenn entsprechend für einen Gerätetausch geschultes Personal nicht zur Verfügung steht.

Aus der GB-A 2 403 042 ist ein Verfahren zum Ersetzen eines Feldgeräts bekannt geworden. Um ein erstes Feldgerät eines Prozesssteuerungssystems durch ein zweites Feldgerät zu ersetzen, weist das erste Feldgerät eine entfernbare Datenspeichervorrichtung auf, die gerätespezifische Konfigurationsdaten enthält. Diese entfernbare Speichervorrichtung wird aus dem ersten Feldgerät entnommen; das erste Feldgerät wird aus dem Prozesssteuerungssystem entfernt; das zweite Feldgerät wird in das Prozesssteuerungssystem eingebaut und die aus dem ersten Feldgerät entfernte Datenspeichervorrichtung wird in das zweite Feldgerät eingesetzt.

Beim Feldbussystem Foundation Fieldbus übernehmen Feldgeräte auch Kontrollfunktionen im Hinblick auf Regelkreise, was mit dem Begriff "Control in the Field" bezeichnet wird. Diese Kontrollfunktionen werden über so genannte Funktionsblöcke (function blocks) realisiert. Als Beispiel für einen solchen Funktionsblock sei ein PID-Block erwähnt, der über den Feldbus mit weiteren Funktionsblöcken kommunizieren kann.

Bei Feldgeräten, die Funktionsblöcke aufweise, ist ein Gerätetausch erheblich aufwendiger. In der Regel erfordert hier ein Gerätetausch einen Wartungstechniker vor Ort am Feldgerät und einen Anlagen-Operator, der vom Leitstand aus die Anlage überwacht. Allgemein erfordert ein Gerätetausch bei solchen Feldbussystemen erheblich mehr Know-how. Häufig erfolgt ein Geräteausfall zu ungünstigen Zeiten, nachts oder an Wochenenden, wenn entsprechend für einen Gerätetausch geschultes Personal nicht zur Verfügung steht.

Vielfach werden deshalb auch Anlagen von vorneherein völlig redundant ausgelegt, was mit erheblichen Kosten verbunden ist.

Aufgabe der Erfindung ist es deshalb ein Verfahren zum Austausch eines Feldgerätes der Automatisierungstechnik anzugeben, das die oben genannten Nachteile nicht aufweist, das insbesondere einen schnellen und einfachen Gerätetausch bei Feldgeräten, die Kontrollfunktionen ausführen, ermöglicht.

Gelöst wird diese Aufgabe durch die im Anspruch 1 angegebenen Merkmale vorteilhafte Weiterentwicklungen der Erfindung sind in den Unteransprüchen angegeben.

Die wesentliche Idee der Erfindung besteht darin, die Konfigurationsdaten des für den Austausch vorgesehenen Feldgerätes in eine Speichereinheit zu Überwachen von Feldgeräten. Der Datenbus D1 arbeitet z. B. nach dem HSE (High Speed Ethernet)-Standard der Foundation Fieldbus. Über ein Gateway G1, das auch als Linking Device oder Field Controller bezeichnet wird, ist der Datenbus D1 mit einem Feldbus-Segment SM1 verbunden. Das Feldbus-Segment SM1 besteht aus mehreren Feldgeräten F1, F2, F3, F4, die über einen Feldbus FB miteinander verbunden sind. Bei den Feldgeräten F1, F2, F3, F4 kann es sich sowohl um Sensoren oder um Aktoren handeln. Der Feldbus FB arbeitet nach dem Feldbusstandard Foundation Fieldbus.

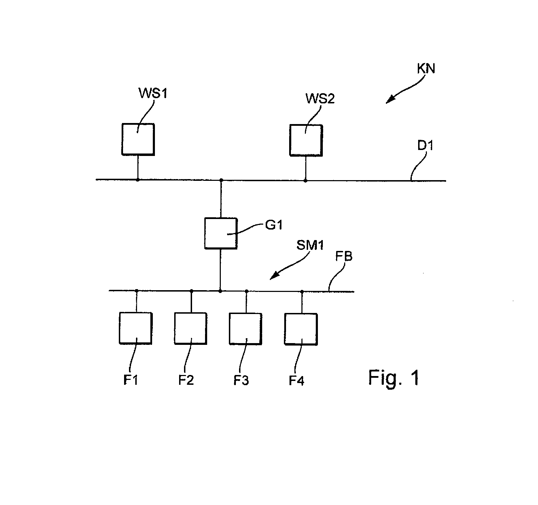

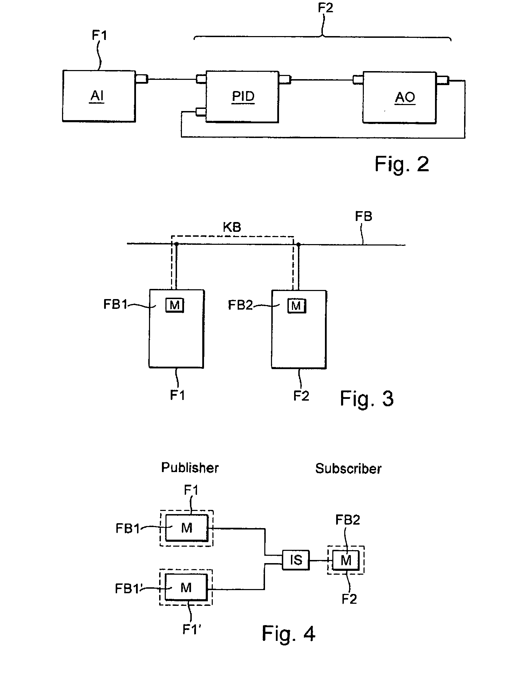

In Figur 2 ist ein kleiner Regelkreis (PID-Regler) mit mehreren Funktionsblöcken dargestellt. Ein Analog-Input AI-Block, ein PID-Block und ein Analog-Out AO-Block kommunizieren dabei entsprechend. Dieser Regelkreis wird bei der Inbetriebnahme des Feldbussystems konfiguriert. Die Kontrollstrategie, d. h. der Regelkreis, wird mit einem entsprechenden Werkzeug z. B. ControlCare der Fa. Endress+Hauser erstellt und anschließend in die Feldgeräte per Download übertragen.

Der Al-Block ist in einem Sensor z. B. dem Feldgerät F1 vorgesehen. Der PID-Block und der AO-Block sind in einem Aktor, z. B. dem Feldgerät F2 vorgesehen.

Der PID-Block kann prinzipiell auch in jedem der anderen Feldgeräte F1, F3, F4 oder im Gateway G1 vorgesehen sein. Einige Funktionsblöcke z. B. Al-Blöcke, DO-Blöcke sind in den Feldgeräten bereits vorinstalliert.

Den zeitlichen Ablauf der Kommunikation im Regelkreis zwischen den Funktionsblöcken steuert ein so genannter Link-Active-Scheduler LAS. Er kontrolliert die Busaktivitäten mit Hilfe verschiedener Kommandos, welche er an die einzelnen Busteilnehmer (Feldgeräte) sendet. Geräte die die Funktion des LAS ausführen, bezeichnet man als Link-Master. Da der LAS fortlaufend auch unbelegte Geräteadressen abfrägt, ist es möglich im laufenden Betrieb Feldgeräte an den Feldbus anzuklemmen und die in den laufenden Betrieb zu integrieren. In vorliegenden Fall ist der LAS im Gateway G1 vorgesehen.

Prinzipiell unterscheidet man bei Foundation Fieldbus zwischen der zyklischen und der azyklischen Kommunikation. Zeitkritische Aufgaben wie z. B. die Regelung der Prozessgrößen über die Regelkreise werden ausschließlich über die zyklische Kommunikation abgewickelt. Die Parametrierung und Diagnose von Feldgeräten erfolgt über die azyklische Kommunikation. Um alle Kommunikationsaufgaben zum richtigen Zeitpunkt und ohne Zugriffskonflikte durchführen zu können, wird die zyklische Kommunikation nach einem festen Bearbeitungszeitplan, der sich zyklisch wiederholt, durchgeführt. Einen Zyklus des Bearbeitungszeitplans nennt man auch Makrozyklus.

Die Kommunikation der Teilnehmer des Foundation Fieldbus erfolgt nach dem Publisher-Subscriber-Prinzip.

Wie bereits erwähnt, liegt für jedes Gerät (Busteilnehmer) der Zeitpunkt fest, an dem das Gerät zum Senden seiner zyklischen Daten vom LAS aufgefordert wird. Das angesprochene Gerät (der Publisher) veröffentlicht daraufhin seine Daten z. B. einen Messwert über den Feldbus. Diese Daten werden dann von allen Geräten, die als Subscriber für diese Daten konfiguriert worden sind, gelesen.

In Fig. 3 ist das Publisher-Subscriber-Prinzip anhand der beiden Feldgeräten F1, F2 mit vereinfacht ganz allgemein dargestellten Funktionsblöcken FB1 und FB2 schematisch dargestellt. Das Feldgerät F1 ist der Publisher für einen Messwert M, das Feldgerät F2 ist der Subscriber für diesen Messwert M. Die Kommunikation zwischen den entsprechenden Funktionsblöcken FB1 (z. B. Al-Block) und FB2 (z. B. PID-Block) erfolgt über die Kommunikationsbeziehung KB.

In Fig. 4 ist die Erfindung anhand eines Ausführungsbeispiels schematisch dargestellt. In diesem Fall ist mit dem Feldbus FB bereits mit einem Ersatz-Feldgerät F1 'verbunden, das einen Funktionsblock FB1' aufweist. Diese beiden Funktionsblöcke kommunizieren mit einem Selektorfunktionsblock IS, der im Gateway G1 vorgesehen ist. Der Selektorfunktionsblock IS ist weiterhin mit dem Funktionsblock FB2 im Feldgerät F2 verbunden. Über den Selektorfunktionsblock IS kann eine Auswahl erfolgen welcher Funktionsblock FB1 bzw. FB1' mit dem Funktionsblock FB2 verbunden werden soll.

Nachfolgend ist das erfindungsgemäße Verfahren näher erläutert.

In einem ersten Verfahrensschritt werden die Konfigurationsdaten K des Feldgerätes F1 in eine mit dem Feldbus FB verbundene Speichereinheit SP geladen. Die Speichereinheit SP ist in vorteilhafter Weise im Gateway G1 vorgesehen.

Die Konfigurationsdaten umfassen vor allem die Konfigurationsdaten für die Funktionsblöcke. So werden spezielle Konfigurationsdaten aus dem "Virtuellen Feldgerät" VFD ausgelesen. Das virtuelle Feldgerät erlaubt die entfernte Darstellung von lokalen Gerätedaten, die im Objekt Dictionary beschreiben sind. Ein typisches Feldgerät besitzt mindestens wei VFDs. Es erlaubt den Zugriff auf die Network Management Information Base (NBIB), die System Management Information Base (SMIB) und Function Block Application FBAP Daten. Ganz allgemein können Konfigurationsparameter;

Kalibrationsinformation; Funktionsblockparameter; Netzwerkparameter;

Links / VCR-Information; bzw Scheduling-Information ausgelesen werden.

Mit diesen Informationen kann im Gateway G1 eine Liste der dem Feldgerät F1 zugeordneten Subscriber erzeugt werden.

Denkbar ist es die Konfigurationsdaten aller an den Feldbus FB angeschlossenen Feldgeräte nach der Konfiguration des Bussystems in die Speichereinheit SP einzulesen. Dann stehen alle notwendigen Daten jederzeit zur Verfügung. Entsprechende Änderungen müssen jedoch nachgepflegt werden.

Einfacher ist es nur die Daten desjenigen Feldgerätes auszulesen, das ausgetauscht werden muss. Über entsprechende Fehlermeldungen kann das Gateway G1 erkennen, welches Feldgerät eventuell ausgetauscht werden muss und damit "weiß" das Gateway G1 auch, welchem Feldgerät ein neu an den Feldbus angeschlossenes Feldgerät zugeordnet werden muss.

In einem zweiten Verfahrensschritt wird ein Ersatz-Feldgerät F1', das das Feldgerät F1 ersetzen soll, mit dem Feldbus FB verbunden.

In einem dritten Verfahrensschritt werden die Konfigurationsdaten K des Feldgeräts F1 von der Speichereinheit SP in das Feldgerät F1' übertragen. Somit weist das Feldgerät F1' die gleiche Funktionalität wie das Feldgerät F1 auf. Das Feldgerät F1' misst wie das Feldgerät F1 z. B. die Temperatur an einer Messstelle.

In einem Verfahrensschritt D wird ein Selektorfunktionsblock IS in die Kommunikationsbeziehung KB installiert, d. h. der Funktionsblock FB1 kommuniziert mit dem Funktionsblock FB2 über den Selektorfunktionsblock IS.

In einem weiteren Verfahrensschritt E wird der Selektorfunktionsblock IS noch mit dem Funktionsblock FB1' verbunden.

Sind alle Verknüpfungen zwischen den Funktionsblöcken ordnungsgemäß erstellt, so kann der Selektorfunktionsblock IS angesteuert werden, so dass der Input nicht mehr vom Funktionsblock FB1 stammt, sondern vom Funktionsblock FB1'. Damit wird das Feldgerät F1 für den Regelkreis nicht mehr benötigt und kann deshalb vom Feldbus abgehängt werden.

Der Regelkreis arbeitet nun problemlos ohne das Feldgerät F1 nur noch mit dem Feldgerät F1' weiter.

Ein Gerätetausch wird dadurch erheblich vereinfacht.

Das erfindungsgemäße Verfahren ist nicht nur für den Austausch von fehlerhaften Geräten geeignet sonder auch für den vorsorglichen im Rahmen von einer vorausschauenden Wartung (predictive maintenance).

Auch in diesem Fall von großem Vorteil, dass eine Unterbrechung des Anlagenbetriebs zum Austausch nicht notwendig ist.

## Patentansprüche

1. Verfahren zum Austausch eines Feldgerätes der Automatisierungstechnik, das mit einem Feldbus (FB) verbunden ist und das mindestens einen ersten Funktionsblock (FB1) aufweist, der über den Feldbus (FB) über eine Kommunikationsbeziehung (KB) mit einem zweiten Funktionsblock (FB2) in einem weiteren mit dem Feldbus (FB) verbundenen Feldgerät (F2) kommuniziert, **dadurch gekennzeichnet, dass** folgende Verfahrensschritte durchgeführt werden:
A. Laden der Konfigurationsdaten (K) des Feldgerätes (F1) in eine mit dem Feldbus (FB) verbundene Speichereinheit (SP)
B. Verbinden eines Ersatz-Feldgerätes (F1') mit dem Feldbus (FB)
C. Übertragung der Konfigurationsdaten (K) des Feldgerätes (F1) von der Speichereinheit (SP) in das Ersatz-Feldgerät (F1')
D. Installation eines Selektorfunktionsblocks (IS) in die Kommunikationsbeziehung (KB) zwischen dem ersten Funktionsblock (FB1) und dem zweiten Funktionsblock (FB2)
E. Verbinden des Selektorfunktionsblocks (IS) mit einem dem Funktionsblock (FB1) entsprechenden Funktionsblock (FB1') im Ersatz-Feldgerät (F1')
F. Umschalten des Selektorfunktionsblocks (IS), so dass der Funktionsblock (FB1') mit dem zweiten Funktionsblock (FB2) kommuniziert.

2. Verfahren nach Anspruch 1, **dadurch gekennzeichnet, dass** die Speichereinheit (SP) in einer Mastereinheit, die den zeitlichen Ablauf der Kommunikation in einem Regelkreis mit mehreren Funktionsblöcken steuert, vorgesehen ist.

3. Verfahren nach einem der vorhergehende Ansprüche, **dadurch gekennzeichnet, dass** nur nach dem eine Fehlfunktion eines Feldgerätes festgestellt wurde, die entsprechenden Konfigurationsdaten in die Speichereinheit (SP) übertragen werden.

4. Verfahren nach den Ansprüchen 1 und 2, **dadurch gekennzeichnet, dass** die Konfigurationsdaten aller Feldgeräte in die Speichereinheit (SP) übertragen werden.

5. Verfahren nach einem der vorhergehenden Ansprüche, **dadurch gekennzeichnet, dass** der Feldbus (FB) nach dem Foundation Fieldbus Standard arbeitet.

## Claims

1. Method for exchanging an automation field device that is connected to a fieldbus (FB) and exhibits at least a first function block (FB1) that communicates, by means of a communication relationship (KB) via the fieldbus (FB), with a second function block (FB2) in another field device (FB2) connected to the fieldbus (FB), **characterized in that** the following process steps are performed:
A. The configuration data (K) of the field device (F1) are loaded to a memory unit (SP) connected to the fieldbus (FB).
B. A replacement field device (F1') is connected to the fieldbus (FB).
C. The configuration data (K) of the field device (F1) are transmitted from the memory unit (SP) to the replacement field device (F1').
D. A selector function block (IS) is integrated into the communication relationship (KB) between the first function block (FB1) and the second function block (FB2).
E. The selector function block (IS) is connected to a function block (FB1') in the replacement field device (F1'), said function block corresponding to the function block (FB1).
F. The selector function block (IS) is switched so that the function block (FB1') communicates with the second function block (FB2).

2. Method as per Claim 1, **characterized in that** the memory unit (SP) is provided in a master unit that controls the communication cycle over time in a control loop with several function blocks.

3. Method as per one of the previous claims, **characterized in that** the configuration data are only transmitted to the memory unit (SP) once a malfunction has been discovered in a field device.

4. Method as per Claims 1 and 2, **characterized in that** the configuration data of all the field devices are transmitted to the memory unit (SP).

5. Method as per one of the previous claims, **characterized in that** the fieldbus (FB) works in accordance with the Foundation Fieldbus standard.

## Revendications

1. Procédé destiné au remplacement d'un appareil de terrain de la technique d'automatisation, lequel appareil est relié à un bus de terrain (FB) et présente au moins un premier bloc fonctionnel (FB1), qui communique par le biais du bus de terrain (FB) via une relation de communication (KB) avec un deuxième bloc fonctionnel (FB2) se trouvant dans un deuxième appareil de terrain (F2) relié avec le bus de terrain (FB), **caractérisé en ce que** les étapes de procédé suivantes sont réalisées :
A. Chargement des données de configuration (K) de l'appareil de terrain (F1) dans une unité de mémoire (SP) reliée avec le bus de terrain (FB)
B. Liaison d'un appareil de terrain de rechange (F1') avec le bus de terrain (FB)
C. Transmission des données de configuration (K) de l'appareil de terrain (F1) de l'unité de mémoire (SP) dans l'appareil de terrain de rechange (F1')
D. Installation d'un bloc fonctionnel sélecteur (IS) dans la relation de communication (KB) entre le premier bloc fonctionnel (FB1) et le deuxième bloc fonctionnel (FB2)
E. Liaison du bloc fonctionnel sélecteur (IS) avec un bloc fonctionnel (FB1') correspondant au bloc fonctionnel (FB1) dans l'appareil de terrain de rechange (F1')
F. Commutation du bloc fonctionnel sélecteur (IS) de telle sorte que le bloc fonctionnel (FB1') communique avec le deuxième bloc fonctionnel (FB2).

2. Procédé selon la revendication 1, **caractérisé en ce que** l'unité de mémoire (SP) est prévue dans une unité maître, qui commande le déroulement temporel de la communication dans un circuit de régulation composé de plusieurs blocs fonctionnels.

3. Procédé selon l'une des revendications précédentes, **caractérisé en ce que** les données de configuration correspondantes ne sont transférées dans l'unité de mémoire (SP) uniquement après qu'un dysfonctionnement d'un appareil de terrain ait été constaté.

4. Procédé selon les revendications 1 et 2, **caractérisé en ce que** les données de configuration de l'ensemble des appareils de terrain sont transférées dans l'unité de mémoire (SP).

5. Procédé selon l'une des revendications précédentes, **caractérisé en ce que** le bus de terrain (FB) fonctionne d'après le standard Foundation Fieldbus.
